# EUROPÄISCHE PATENTSCHRIFT

(11) **EP 0 975 892 B1**
(45) Veröffentlichungstag und Bekanntmachung des Hinweises auf die Patenterteilung: **02.10.2002**
(21) Anmeldenummer: 98922718.6
(22) Anmeldetag: 15.04.1998
(51) Int. Cl.: F16F 15/023, F16F 9/53

(54) **FEDER-MASSEN-SCHWINGKRAFTKOPPLER**
SPRING/MASS VIBRATORY FORCE COUPLER
COUPLEUR A FORCES VIBRATOIRES POUR RESSORTS/MASSES

(30) Priorität: 26.04.1997 DE 19717692
(43) Veröffentlichungstag der Anmeldung: 02.02.2000
(73) Patentinhaber: Bayer Aktiengesellschaft, 51368 Leverkusen (DE); CARL SCHENCK AG, 64293 Darmstadt (DE)
(72) Erfinder: POHL, Andreas, D-64823 Gross-Umstadt (DE); ROSENFELDT, Horst, D-64846 Gross-Zimmern (DE); WENDT, Eckhardt, D-51373 Leverkusen (DE); BÜSING, Klaus, D-50676 Köln (DE)
(74) Vertreter: von Kreisler, Alek, Dipl.-Chem.
(86) Internationale Anmeldenummer: EP9802206
(87) Internationale Veröffentlichungsnummer: WO98049460

(56) Entgegenhaltungen:
- EP-A- 0 215 999
- WO-A-98/16760
- DE-A- 19 509 504
- DE-A- 19 617 839
- DE-A- 19 645 471
- US-A- 4 679 759
- US-A- 5 052 662
- US-A- 5 569 432

## Beschreibung

Die Erfindung betrifft einen elektrisch variierbaren Feder-Massen-Schwingkraftkoppler mit variabler Dämpfung, elektrisch einstellbaren Federkennlinien und elektrisch einstellbaren variablen Eigenfrequenzen unter Nutzung elektrorheologischer oder magnetorheologischer Flüssigkeiten (im folgenden kurz ERF bzw. MRF genannt) in seinen Kopplungselementen für die Ankopplung von Massen oder Federn. Der Feder-Massen-Schwingkraftkoppler ermöglicht die elektrische Einstellung von Schwingkräften und insbesondere die Veränderung des Eigenschwingverhaltens unterschiedlicher Maschinen und Vorrichtungen wie beispielsweise Auswuchtmaschinen, Prüfmaschinen, Getriebe, Motoren und Lagerungen unterschiedlicher Art in Abhängigkeit eines elektrischen und/oder magnetischen Steuersignals.

Dämpfer auf der Basis von ERF bzw. MRF sind bekannt. Die Ankopplung von Massen an schwingende Systeme mittels eines festen Federgliedes und eines Dämpfungsgliedes, das über eine elektrorheologische Flüssigkeit gesteuert werden kann, ist grundsätzlich bekannt.

Der Aufsatz "Einsatzpotential von elektrorheologischen Flüssigkeiten" von H. Janocha und D. J. Jendritza aus Konstruktion 46 (1994) Seite 111-115, beschreibt die Masseankopplung über ein Feder/Dämpfersystem, bei dem die Federsteifigkeit konstant gehalten wird und die Dämpfung über eine elektrorheologische Flüssigkeit variiert werden kann. Es wird dort weiter beschrieben, über ein Feder-/Dämpferelement eine Hilfsmasse zur Tilgung von Schwingungen an eine Hauptmasse anzukoppeln. Die Ankopplung erfolgt ebenfalls über eine Kombination aus einer Feder mit fester Federsteifigkeit und einem ERF-Dämpferglied, über das die Dämpfung variiert werden kann. Mit Hilfe dieser Anordnung läßt sich die Amplitude einer mechanischen Schwingung im Resonanzfall dämpfen. Ein wichtiger Nachteil an dieser Anordnung ist jedoch, daß die Dämpfung nur bei einer bestimmten Festfrequenz wirkt. Eine Variation der Resonanzfrequenz ist mit Hilfe dieser Anordnung nicht möglich.

Es ist weiterhin bekannt, Federelemente unterschiedlicher Art über konventionelle Ventile an schwingende Systeme zur Dämpfung bzw. Federung anzukoppeln. Als Beispiel hierzu sei die im Automobilbau entwickelte sogenannte "Hydroaktive Federung" angeführt, die zur Dämpfung der Schwingungen eines Kraftfahrzeugfahrwerks spezielle Gasdruckfedern einsetzt, welche über geeignete Ventile den Radaufhängungen des Fahrwerks zugeschaltet werden können.

Um einen guten Fahrkomfort zu gewährleisten, ist eine Federung mit hoher Flexibilität und geringer Dämpfung gewünscht. Für eine gute Straßenlage und ein hohes Maß an Fahrsicherheit ist dagegen eine steife Federung mit einer gleichzeitig hohen Dämpfung gefordert. Das hydroaktive Federungssystem ermöglicht durch Öffnen und Schließen eines Elektromagnetventils den fest installierten Gasdruckfedern jeder Radaufhängung eine weitere Gasdruckfeder hinzuzuschalten, wodurch sich zwei Zustände, nämlich
a) eine hohe Federflexibilität bei geringer Dämpfung sowie
b) eine geringe Federflexibilität bei hoher Dämpfung einstellen lassen.

Ein Nachteil der hydroaktiven Federung ist, daß das Federungssystem nur zwischen den genannten beiden Zuständen variierbar ist. Eine kontinuierliche Verstellung der Dämpfung oder eine kontinuierliche Verstellung der Federsteifigkeit ist bei diesem Federsystem nicht erreichbar.

Die Möglichkeit, elektrorheologische Flüssigkeiten zur kontinuierlichen Dämpfungsänderung der Automobilstoßdämpfer einzusetzen, ist in der SAE-Veröffentlichung 950 586 vom 27. 2. 1995 beschrieben. In dem dort beschriebenen Dämpfer drückt der Kolben des Dämpfers eine elektrorheologische Flüssigkeit durch einen Elektrodenspalt. Durch den Einfluß eines elektrischen Hochspannungsfeldes, hervorgerufen durch den Kondensator im Elektrodenspalt, läßt sich die Dämpfung des Stoßdämpfers kontinuierlich verändern. Gewöhnlich werden konventionelle Stoßdämpfer auf Basis viskoser Öle mit einer Spiralfeder kombiniert, so daß sich bei Anwendung des genannten elektrorheologischen Dämpfers auf einer klassischen Federdämpferkombination lediglich die Dämpfung, nicht aber die Federsteifigkeit grundsätzlich variieren läßt.

Die Anwendungsmöglichkeit von elektrorheologischen Flüssigkeiten zum Einsatz in hydraulischen Systemen ist grundsätzlich bekannt. So werden elektrorheologische Flüssigkeiten z.B. in Stoßdämpfern (siehe z.B. US 32 07 269) oder Motorlagern mit hydraulischer Dämpfung (Siehe z.B. EP 137 112 Al) vorgeschlagen.

Aus der US 5 052 662, die bezüglich des Anspruchs 1 den nächstliegenden Stand der Technik darstellt, ist ein Dämpferelement zur Aufhängung von einem Motor in einem Chassis bekannt. Das Dämpferelement weist einen elastischen Körper auf, der mit zwei zylindrischen Körpern verbunden ist. Innerhalb eines der beiden zylindrischen Körper ist eine mit elektrorheologischer Flüssigkeit gefüllte Kammer vorgesehen. Diese Kammer ist über eine Lochplatte innerhalb desselben zylindrischen Körpers mit einer Hilfskammer vorgesehen. Die Lochplatte, die Elektroden aufweist, ist als elektrorheologisches Ventil ausgebildet, so dass durch Anlegen von Spannung die beiden Kammern miteinander verbunden oder voneinander getrennt werden können. In dem anderen mit dem elastischen Körper verbundenen zylindrischen Körper ist ebenfalls eine Kammer vorgesehen. Diese ist über ein zweites elektrorheologisches Ventil mit der Hauptkammer verbunden. Die Verbindung kann durch das Ventil geöffnet oder geschlossen werden. Das Öffnen oder Schließen der beiden elektrorheologischen Ventile dient zur Einstellung des dynamischen Dämpfungsverhaltens des Dämpfers.

Aus US 4 679 759 ist ein hydraulisches Federungssystem mit zwei oder mehr Gasdruckfedern bekannt. Diese Druckschrift stellt den nächstliegenden Stand der Technik zum Anspruch 7 dar.

Der Erfindung liegt die Aufgabe zugrunde, einen Feder-Massen-Schwingkraftkoppler zu entwickeln, der eine variable Dämpfung von mechanischen Schwingungen von an den Feder-Massen-Schwingkrafkoppler angekoppelten schwingenden Vorrichtungen ermöglicht, gleichzeitig eine kontinuierliche Veränderung der Federsteifigkeit zuläßt und gegebenenfalls eine Ankopplung weiterer Massen an das schwingende System zuläßt zur Änderung der mechanischen Eigenschwingungsfrequenz und ihrer Amplituden.

Gegenstand der Erfindung, durch die diese Aufgabe gelöst wird, ist ein Feder-Massen-Schwingkraftkoppler mit variabler Dämpfung zur Ankopplung von Massen an eine Bezugsmasse, bestehend wenigstens aus einer schwingenden Masse, im folgenden kurz als Schwingmasse bezeichnet, einem Dämpfer, zwei Federn zur Verbindung von Schwingmasse und Bezugsmasse, von denen mindestens eine Feder wahlweise zuschaltbar gestaltet ist, gegebenenfalls einer weiteren Hilfsmasse, die über ein gegebenenfalls zuschaltbares Feder-/Dämpferelement mit der Masse verbunden ist, wobei die Zuschaltung der Feder oder gegebenenfalls der Hilfsmasse über Kopplungselemente auf Basis einer elektrorheologischen oder magnetorheologischen Flüssigkeit erfolgt.

Bevorzugt können weitere Massen über weitere schaltbare Feder-/Dämpferelemente zugeschaltet werden, wodurch z.B. eine Tilgung mechanischer Schwingungen möglich wird.

Es ist weiterhin möglich, weitere Feder-/Dämpferkopplungselemente zwischen die schwingende Masse und die Bezugsmasse zu schalten, die die Federsteifigkeit der Federverbindung zwischen Masse und Bezugsmasse verändern. Die Feder-/Dämpferkopplungselemente sind insbesondere als Kombination aus bekannten Federelementen wie Torsions-, Spiral-, Biege- oder Längsfedern oder auch Gasdruckfedern in Kombination mit auf elektrorheologischen Flüssigkeiten bzw. magnetorheologischen Flüssigkeiten basierenden Dämpfern ausgeführt. Ein Beispiel für einen auf elektrorheologischen Flüssigkeiten basierenden Dämpfer findet sich in der Patentschrift US 32 07 269.

Die Kopplungselemente sind im einfachsten Falle auf elektrorheologische Flüssigkeiten bzw. magnetorheologischen Flüssigkeiten basierenden Dämpfer, in denen über eine hinreichend hohe einstellbare Fließgrenze der ERF (bzw. MRF) eine starke Verbindung zwischen schwingenden Massen herzustellen ist. Unterhalb der maximalen Fließgrenze der ERF (bzw. MRF) weist der ERF- bzw. MRF-Dämpfer eine kontinuierliche Verstellbarkeit der Dämpfung auf.

Die auf elektrorheologischen Flüssigkeiten basierenden Kopplungselemente werden über elektrische Spannungen angesteuert, durch die die in den Kopplungselementen enthaltenen Kondensatoren elektrische Felder zur Steuerung der rheologischen Größe Fließgrenze und Modul der elektrorheologischen Flüssigkeiten aufbauen.

Unter elektrorheologischen Flüssigkeiten werden Dispersionen fein verteilter elektrisch polarisierbarer Teilchen in hydrophoben, elektrisch hoch isolierenden Ölen (allgemein Suspension elektrisch polarisierbarer nicht leitender Teilchen) verstanden, die unter Einfluß eines elektrischen Feldes mit hinreichend starker elektrischer Feldstärke schnell und reversibel ihre Fließgrenze bzw. ihren Schub- oder Schermodul unter Umständen über mehrere Größenordnungen ändern. Die ERF wechselt dabei gegebenenfalls vom dünnflüssigen über den plastischen bis nahezu zum festen Aggregatzustand.

Beispiele für geeignete elektrorheologische Flüssigkeiten sind in den Offenlegungsschriften DE 35 17 281 A1, DE 35 36 934 A1, DE 39 41 232 A1, DE 40 26 881 A1, DE 41 31 142 A1 und DE 41 19 670 A1 genannt.

Zur Anregung der elektrorheologischen Flüssigkeiten dienen sowohl elektrische Gleich- als auch Wechselspannungsfelder. Die hierbei erforderliche elektrische Leistung ist vergleichsweise gering.

Zur Steuerung des Fließverhaltens der elektrorheologischen Flüssigkeit in den Kopplungselementen kann ein Sensor benutzt werden, wie er z.B. in der Deutschen Offenlegungsschrift DE 36 09 861 A1 beschrieben ist.

Der erfindungsgemäße Feder-Massen-Schwingkraftkoppler kann zur Modifikation mechanischer Eigenschwingungen in Maschinen aller Art eingesetzt werden. Beispielhaft genannt seien hier Auswuchtmaschinen, Werkzeugmaschinen, Unwuchterreger, Prüfmaschinen, Resonanzprüfmaschinen, Wechselbiegemaschinen, Siebförderer, Exzenterpressen, Kurbelgetriebe, Schwing- und Resonanzantriebe und Schwinggetriebe, Motoren und Lagerungen aller Art. Durch die erfindungsgemäße Feder- und/oder Massenkopplung ist es möglich, Motorschwingungen von Fahrzeugen und andere mechanische Schwingungen zu kompensieren.

Das grundsätzlich bekannte hydroaktive Federungssystem ist unter Verwendung des erfindungsgemäßen Konzepts des Feder-Massen-Schwingkraftkopplers wie folgt variierbar: Die Hydraulikflüssigkeit des im Prinzip bekannten Federungssystems wird durch eine elektrorheologische Flüssigkeit ersetzt. Die Strömungskanäle der Hauptdämpfer des Federungssystems werden um elektrorheologische Ventile (Elektrodenspalte) ergänzt. Eine zusätzliche zuschaltbare weitere Gasdruckfeder wird anstelle über konventionelle Dämpfer und Magnetventile mit Hilfe von steuerbaren elektrorheologischen Ventilen an die Fahrwerkgasdruckfedern angekoppelt. Diese bevorzugte Ausführung der Erfindung weist eine vielfältig steuerbare Dämpfung bzw. Federsteifigkeit auf, die sich je nach Fahrsituation bzw. Fahrbahn-Zustand in weiten Bereichen einstellen läßt. Da elektrorheologische Flüssigkeiten in einem Zeitraum von typischerweise weniger als 5 Millisekunden auf Änderungen des elektrischen Feldes reagieren können, ist es möglich, über geeignete Sensoren und Steuerelektronik die gewünschte Veränderung der Dämpfer-Federcharakteristik mit hoher Geschwindigkeit zu realisieren. Der in einem elektrorheologischen Ventil fließende Strom ist von der Durchflußgeschwindigkeit der ERF abhängig. Es ist daher möglich, diesen Effekt entsprechend der Patentschrift EP 238 942 direkt als Sensor für die Kontrolle und Steuerung des Dämpfungssystems einzusetzen.

Die Erfindung wird nachstehend anhand der Figuren beispielhaft näher erläutert. In den Figuren zeigen:
- Fig. 1: eine schematische Darstellung zur Erläuterung des erfindungsgemäßen Feder-Massen-Schwingkraftkopplers im Querschnitt.
- Fig. 2: ein ERF-Koppel- bzw. Dämpferelement 15 aus Fig. 1 im vergrößerten Querschnitt.
- Fig. 3: ein ERF-Koppelelement 110 aus Fig. 1 im vergrößerten Querschnitt.
- Fig. 4: ein Feder-Dämpfer-Koppelelement 115 auf Basis einer ERF aus Fig. 1 in vergrößerter Darstellung.
- Fig. 5: ein MRF-Koppelelement 112 zur Ankopplung der Feder 19 in Fig. 1 dargestellt im vergrößerten Querschnitt.
- Fig. 6: eine Ausführungsform des Feder-Massen-Schwingkraftkopplers mit Torsionsfedern als Federelemente im Querschnitt.
- Fig. 7: den vereinfachten Querschnitt durch ein ERF-Koppelelement 67 nach Fig. 6 zur Ankopplung einer Masse an eine Torsionsfeder 64.
- Fig. 8: den Einsatz eines erfindungsgemäßen Feder-Massen-Schwingkraftkopplerelements in einer "hydroaktiven Federung".
- Fig. 9: den vergrößerten schematischen Querschnitt durch eine Gasfederkugel 81 mit ERF-Dämpferelement aus Fig. 8.

### Beispiele

### Beispiel 1

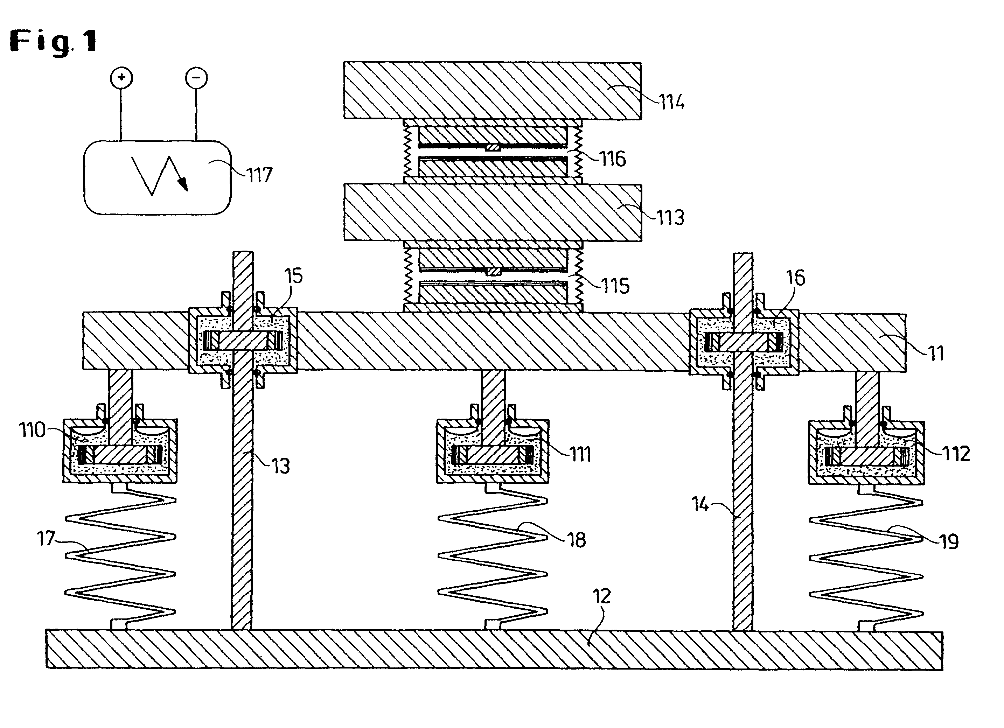

In dem schematischen Schnitt der Fig. 1 ist die Erfindung beispielhaft dargestellt. Die Bezugsmasse 12 ist über 3 zuschaltbare Feder-Dämpferelemente 17, 110, 18, 111 und 19, 112 mit der Schwingmasse 11 verbunden. Die Feder-Dämpferelemente 17, 110, 18, 111 bzw. 19, 112 sind Kombinationen aus konventionellen Spiralfedern 17, 18, 19 mit Dämpfern 110 oder 111 auf Basis von elektrorheologischen Flüssigkeiten oder einem Dämpfer auf Basis einer magnetorheologischen Flüssigkeit 112. Die Schwingmasse 11 ist mindestens noch über eine fest verbundene nicht gezeichnete Feder mit der Bezugsmasse 12 verbunden. Die Schwingmasse 11 wird zusätzlich über Führungsstangen 13, 14 mit Koppelelementen 15, 16 geführt.

Eine Tilgermasse 113 wird über ein ERF-Feder-Dämpfer-Koppelelement 115 zur Tilgung bestimmter mechanischer Schwingungen an die Schwingmasse angekoppelt. Mit Hilfe einer Hilfsmasse 114, die über ein weiteres Feder-Dämpfer-Koppelelement mit der Tilgermasse vebunden ist, kann die Resonanzfrequenz der Schwingung der Tilgermasse 113 verschoben werden.

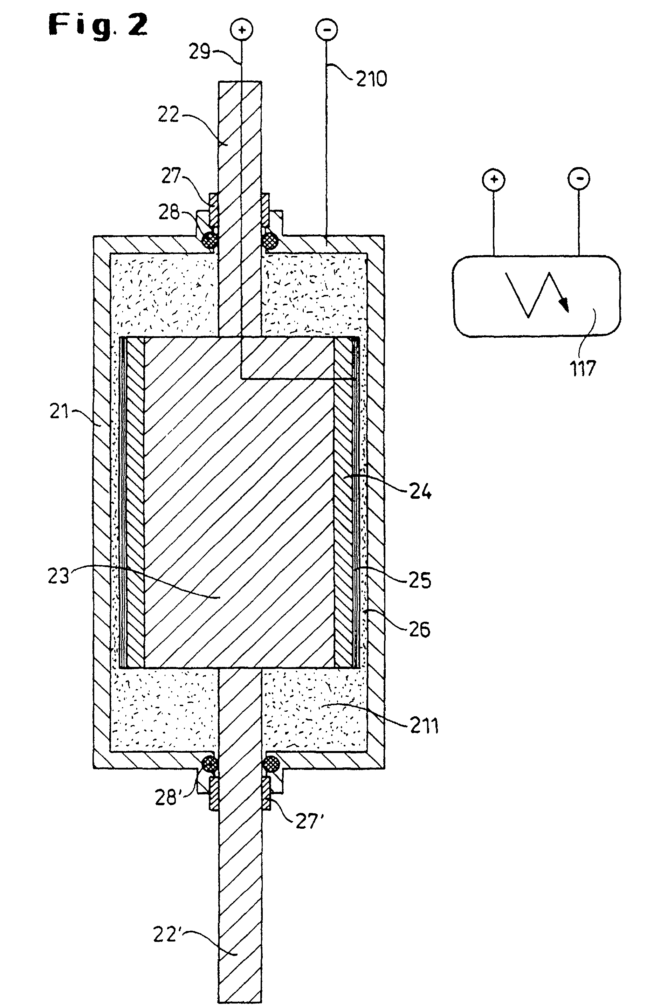

Fig. 2 zeigt ein Detail des Aufbaus der ERF-Koppel- bzw. der Dämpferelemente 15 oder 16 an den Führungsstangen 13 oder 14. Die Kolbenstangen 22, 22' sind mit dem Kolbenkörper 23 verbunden, der im Gehäuse 21 des Koppelelementes 15 oder 16 bewegt werden kann. Das Gehäuse 21 ist mit einer ERF 211 gefüllt und über Gleitringdichtungen 28, 28' und Führungsbuchsen 27, 27' and den Kolbenstangen 22, 22' abgedichtet. Durch den Schaft der oberen Kolbenstange 22 ist eine elektrische Zuleitung 29 für die Hochspannung aus der externen Spannungsversorgung 117 geführt, die durch den Isolator 24 bis zur Elektrodenfläche 25 geführt ist.

Durch Anlegung einer Spannung zwischen Gehäuse 21 und Elekrode 25 erhöht sich die Fließgrenze der ERF 211 im Ringspalt 26. Es ist möglich durch eine hinreichend hohe Spannung die ERF 211 so anzusteuern, daß eine starke Verbindung zwischen dem Gehäuse 21 und dem Kolbenkörper 23 erreicht wird. Dadurch wird es möglich, die Schwingmasse 11 fest an die Bezugsmasse 12 anzukoppeln.

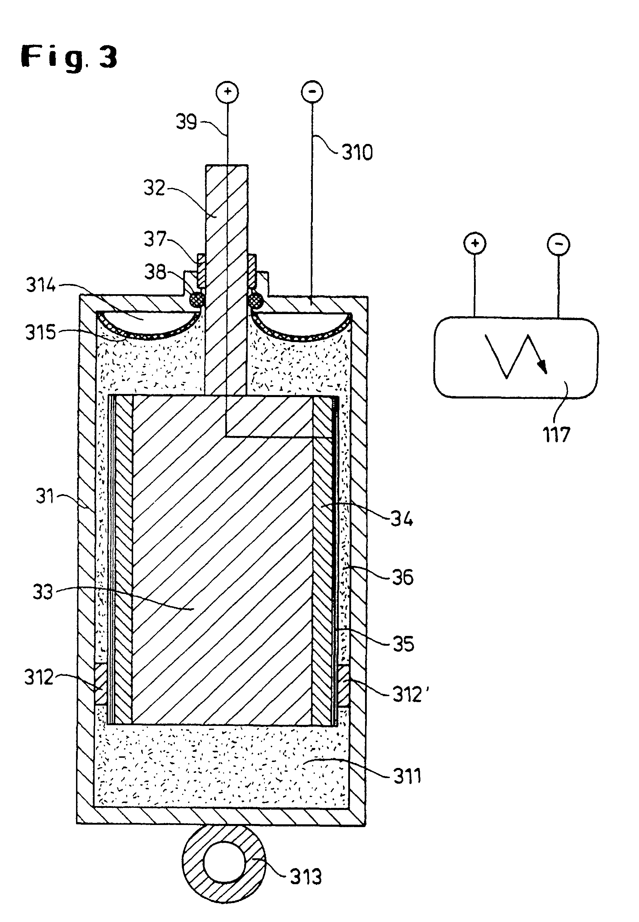

Den Aufbau der ERF-Koppelelemente 110 oder 111 gibt Fig. 3 wieder. Das Gehäuse 31 ist mit einer Öse 313 zur Begestigung der Federn 17 oder 18 verbunden und umschließt die ERF 311 sowie den in die ERF 311 eintauchenden Kolben 33. Der Kolben 33 ist mit der Kolbenstange 32 verbunden, die an der Schwingmasse 11 befestigt ist. Die Kolbenstange 32 wird über eine Dichtung 38 und eine Führungsbuchse 37 beweglich in das Gehäuse 31 durchgeführt. Der Kolben 33 wird über eine elektrisch isolierende Führung 312, 312' geführt, die durchbrochen ist um ein Strömen der ERF durch den Ringspalt 36 zu ermöglichen. Durch den Schaft der Kolbenstange 32 ist die elektrische Hochspannungszuleitung weiter durch eine Isolatorschicht 34 bis zur Elekrodenfläche 35 geführt. Ein Ausgleichsvolumen 314 im oberen Teil des Gehäuses 31 ist durch eine elastische Membran 315 von der ERF 311 abgetrennt und sorgt für einen Ausgleich des Volumens der Kolbenstange 32, das zusätzlich in das Gehäusevolumen 31 eintaucht. Mit dem Anlegen einer elektrischen Spannung and die Elekrode 35 gegenüber dem Gehäuse 31 wird die Fließfähigkeit der ERF 311 im Elekrodenspalt 36 eingeschränkt und eine gedämpfte bzw. feste Ankoppelung der Federn 17 oder 18 an die Schwingmasse 11 ermöglicht.

### Beispiel 2

Eine Variante des Feder-Massen-Schwingkraftkopplers wie in Beispiel 1 dargestellt arbeitet mit einem Koppelelement auf Basis einer magnetorheologischen Flüssigkeit (MRFC) zur Ankopplung von Federn bzw. Massen.

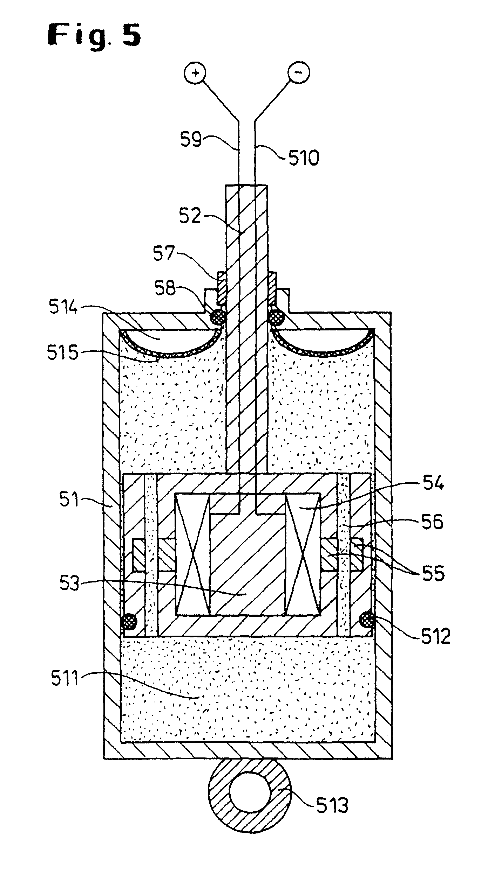

In Fig. 5 ist ein Detail eines MRF Koppelelements 112 gezeigt, das in seiner Funktion grundsätzlich vergleichbar ist mit dem oben beschriebenen ERF-Koppelelement 110. Das Gehäuse 51 enthält die MRF 511, ein Ausgleichvolumen 514 hinter einer Membran 515 sowie einen Kolben 53, der über die Kolbenstange 52 mit der Schwingmasse 11 verbunden ist. Der Kolben 53 wird über eine Ringdichtung 512 geführt und ist im Gehäuse 51 beweglich gestaltet. Fig. 5 zeigt ein Kupplungsglied auf Basis einer magnetorheologischen Flüssigkeit. Das Gehäuse 51 enthält eine magnetorheologische Flüssigkeit und einen Kolben 53 mit einem Elektromagneten 54 mit elektrischen Zuleitungen 510 und 59, die über die Kolbenstange 52 zugeführt werden. Der Kolben trennt zwei Räume 511 und 516, die die magnetorheologische Flüssigkeit enthalten. Der Kolben ist durch einen Ringspalt 56 durchbrochen, über den ein Flüssigkeitsaustausch zwischen den Räumen 516 und 511 ermöglicht wird. Außerhalb des magnetischen Isolators 55 wird bei Einschalten des Elektromagneten in dem Ringspalt 56 ein magnetisches Feld erzeugt, dessen Feldlinien senkrecht zur Oberfläche des Ringspaltes stehen. Der Kolben 53 ist gegenüber dem Gehäuse 51 mit einer Führungsdichtung 512 versehen, die den Durchtritt der magnetorheologischen Flüssigkeit zwischen Gehäusewand 51 und Kolben 53 bei der Bewegung des Kolben 53 verhindert. Die Kolbenstange 251 ist über eine Durchführung 57 mit einer Ringdichtung 58 in das Gehäuse durchgeführt. Zusätzlich sind Ausgleichsvolumina 514 vorgesehen die über eine Membrane 515 von der magnetorheologischen Flüssigkeit abgetrennt sind. Das Ausgleichsvolumen 514 dient zum Ausgleich der Volumenzunahme durch die einfahrende Kolbenstange 52. Gleichzeitig wird durch das Ausgleichsvolumen 514 wie auch entsprechend durch das Volumen 314 in Fig. 3 eine Kavitation in den Räumen der magnetorheologischen Flüssigkeit verhindert. Mit steigender Magnetfeldstärke im Ringspalt 56 steigt die Dämpfung des MRF-Dämpfungsgliedes. Wird die maximale Fließgrenze der MRF erreicht, wird eine starre Ankopplung der mit der Stange 52 bzw. dem Gehäuse 51 über ein Befestigungsmittel 513 verbundenen Massen ermöglicht.

### Beispiel 3

In diesem Beispiel ist der in Beispiel 1 dargestellte Feder-Massen-Schwingkraftkoppler um die Ankopplung einer Tilgermasse 113 sowie gegebenenfalls einer Hilfsmasse 114 ergänzt, wie in Fig. 1 schematisch wiedergegeben ist.

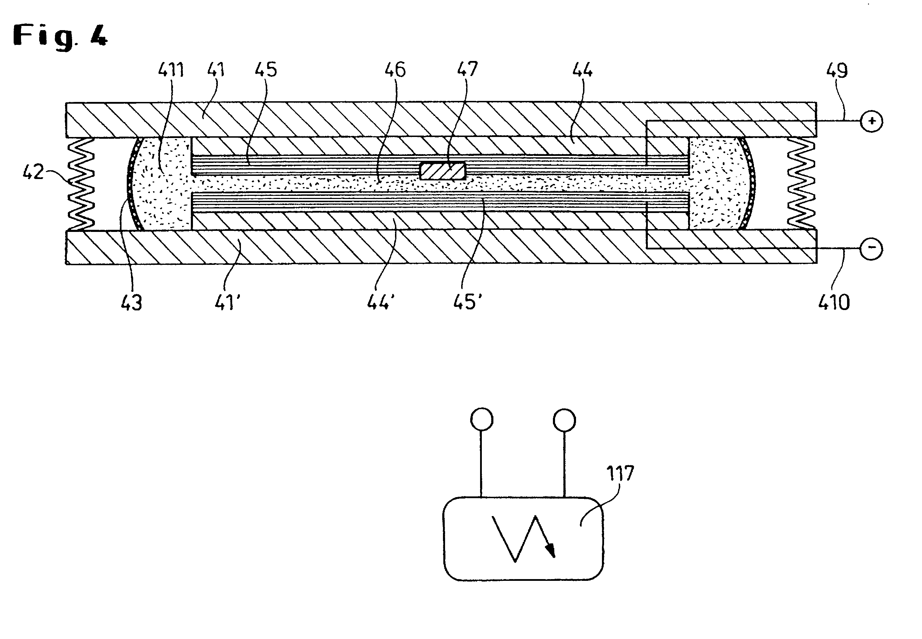

Fig. 4 gibt das ERF-Koppelelement 115 (bzw. 116) zur Ankopplung der Tilgermasse 113 oder der Hilfsmasse 114 and die Schwingmasse 11 in vergrößerter Schnittdarstellung wieder. Die Endplatten 41, 41' sind mit einem Federbalg 42 verbunden.

Die ERF 411 wird seitlich begrenzt durch eine Membran 43 und zwischen zwei Kondensatorplatten 45, 45' eingeschlossen, die über Isolatoren 45, 45' elektrisch isoliert und durch Stromzuleitungen 49, 410 mit einer externen variablen Spannungsquelle 117 verbunden sind. Ein isolierender Abstandshalter 47 verhindert beim Anlegen einer Spannung einen Kurzschluß zwischen den Platten 44 und 44'. Mit dem Anlegen einer Sapnnung kann die ERF 411 zwischen den Platten 44 und 44' im Falle einer Schwingungsankopplung der Massen 113 oder 114 im Quetschmodus angesteuert werden. Es ist möglich mit einer Wechselspannung eine mechanische Schwingung der Masse 113 zu erzeugen, die z.B. in gegenläufiger Phase zu einer Schwingung der Schwingmasse 11 schwingt. Dadurch wird die Tilgung mechanischer Schwingungen möglich. Das Kopplungselement 116 kann dazu verwendet werden die Hilfsmasse 114 an die Tilgermasse 113 anzukopplen um damit die Frequenz der Schwingungstilgung durch die Tilgermasse 113 zu beeinflussen. Die Membran 43 ist vorzugsweise so gewählt, daß ihre Steifigkeit nur vernachläßigbar zur Federsteifigkeit der Feder Beiträgt.

### Beispiel 4

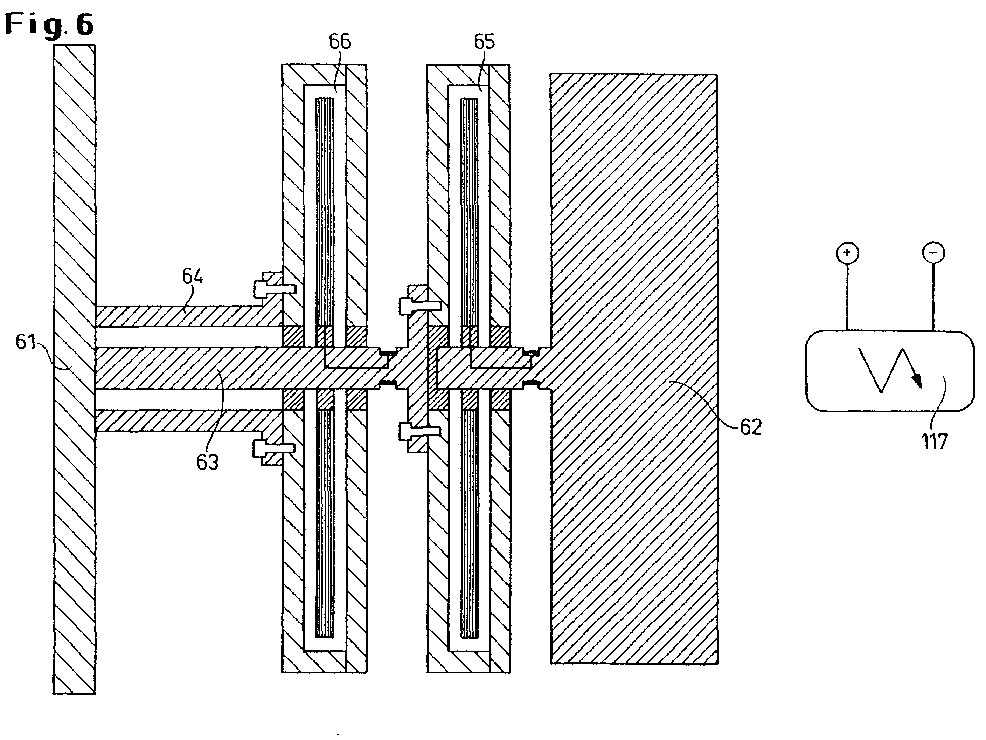

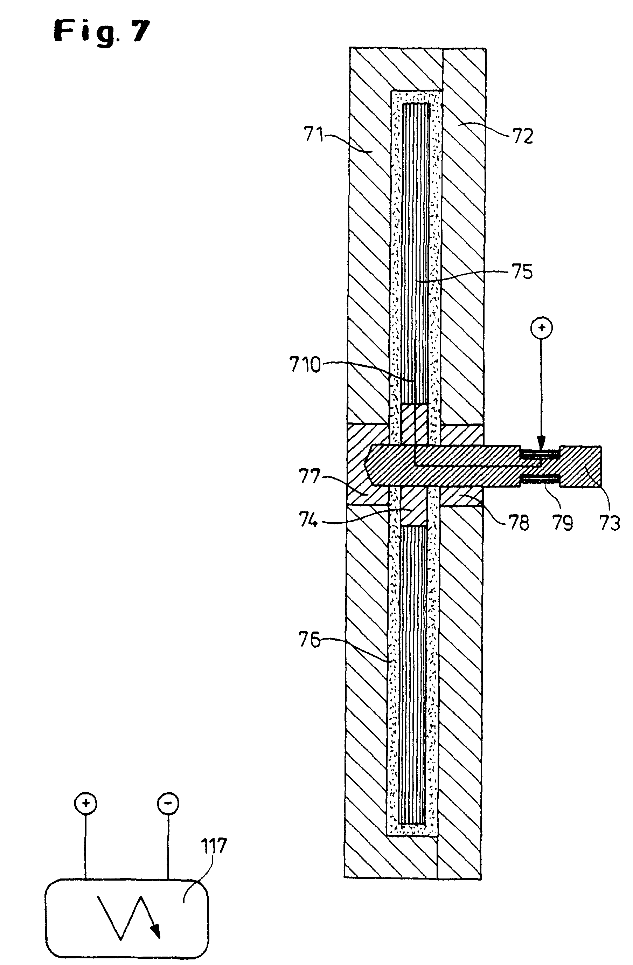

Die Fig. 6 und 7 geben eine Variante des erfindungsgemäßen Feder-Massen-Schwingkraftkopplers zur Ankopplung von Drehmomenten wieder. Die Schwingmasse 62 wird darin über zwei Torsionsfedern 63 bzw. 64 mittels der elektrorheologischen Flüssigkeiten 65 bzw. 66 in den beiden Koppelelementen an die Bezugsmasse 61 angekoppelt. Fig. 7 gibt den Aufbau der Koppelelemente wieder. Durch den Schaft 73 wird eine elektrische Leitung 710 vom Schleifkontakt 79 zu der runden Elekrodenplatte 75 geführt., die elektrisch isoliert (durch den Isolator 74) in Gehäuse 71, 72 von der ERF 76 umgeben ist. Der Schaft ist in Buchsen 77, 78 drehbar gelagert, die den Innenraum mit der ERF 76 abdichten. Der Schaft ist wie in Fig. 6 zu sehen im Falle des einen Kopplers mit der Schwingmasse 62 verbunden. Im Falle des anderen Kopplers ist der Schaft Teil der Torsionsfeder 63 und an seinem oberen Ende mit der Gehäusewand 71 des einen Koppelelementes fest verbunden, Die Fließgrenze der elektrorheologischen Flüssigkeit 65 bzw. 66 wird über die Spannung an den Elekroden 75 (Fig. 7) sowie dem Gehäuse der Koppelelemente als Gegenpol der Elekroden gesteuert. Legt man beispielsweise zwischen der Elektrode 75 und dem Gehäuse 71, 72 eine Spannung an, so wird die elektrorheologische Flüssigkeit 65 zwischen Gehäuse 71, 72 und Elektrode 75 hochviskos und die Schwingmasse 62 über die damit verbundenen Elekrode 75 an die Feder 63 angekoppelt. Ebenso kann durch Anlegen einer geeigneten Spannung zwischen der anderen Elektrode und dem entsprechenden Gehäuse 68 die dazwischenliegende elektrorheologische Flüssigkeit 66 hochviskos werden und die Feder 64 an die Feder 63 ankoppeln. Die Schwingmasse 62 ist dann über beide Federn 64 und 63 schwingend mit der Bezugsmasse 61 verbunden. Die elektrorheologischen Flüssigkeiten 65, 66 dienen dabei als Koppelmedium.

### Beispiel 5

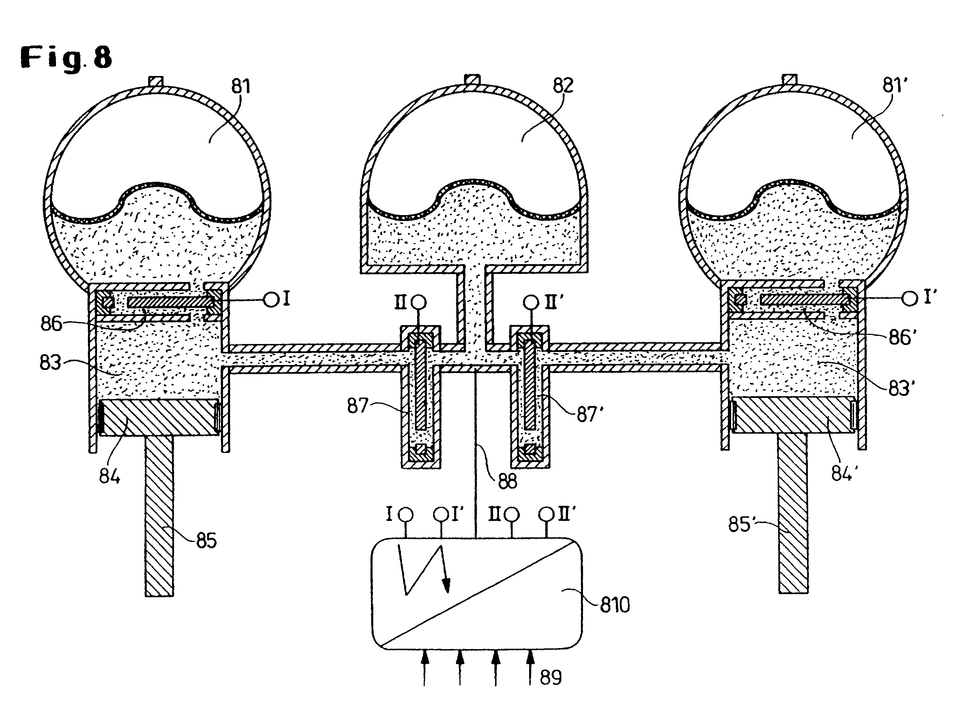

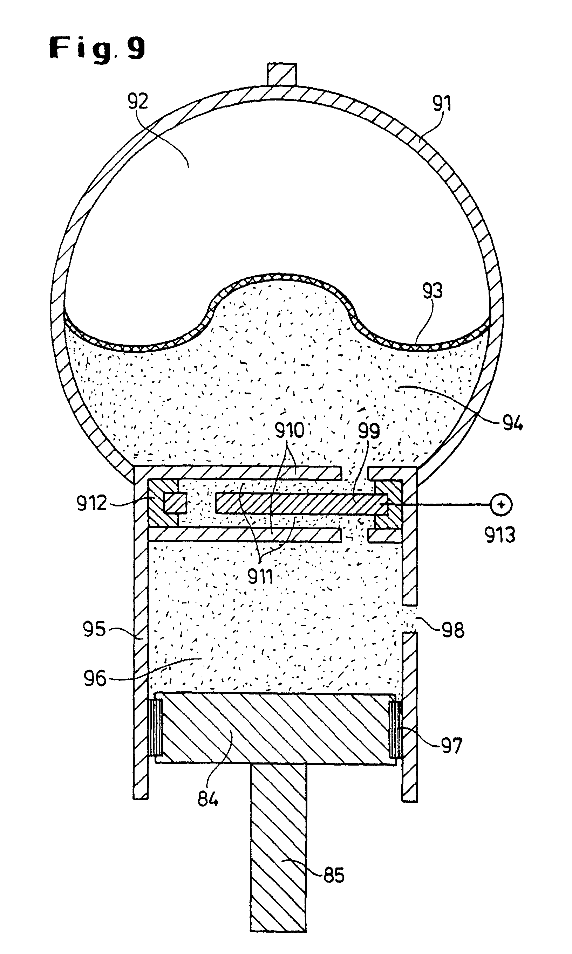

Fig. 8 verdeutlich die Anwendung des Feder-Massen-Schwingkraftkopplers gemäß der Erfindung anhand eines modifizierten hydroaktiven Federsystems für Kraftfahrzeuge. Mechanische Schwingungen und Stöße, die durch unebenheiten der Fahrbahn auf die Räder des Fahrwerks übertragen werden, werden über die Radaufhängung des Fahrwerks (nicht gezeichnet) und die damit verbundenen Kolbenstangen 85 bzw. 85' auf die Kolben 84 bzw. 84' übertragen. Die Kolben 84, 84' sind mit Gleitdichtungen 97 versehen und drücken eine als Hydrauliköl benutzte elektrorheologische Flüssigkeit 83, 83' durch ERF-Ventile 86, 86' in das Volumen der Gasdruckfedern 81, 81' in der ein Gasdruckraum 92 von der Hydraulikflüssigkeit 94 durch Membranen 93 getrennt ist (siehe Fig. 9). Die Elektrodenspalte 911 befindet sich zwischen der Kondensatorplatte 99 und dem Gehäuse 910 der Ventile 86 und 86' auf die eine elektrische Spannung zur Steuerung der Viskosität der ERF gegeben werden kann. Ein Isolator 912 vermeidet elektrische Durchschläge zur Gehäusewand. Eine zusätzliche Gasdruckfeder 82 kann über weitere elektrorheologische Ventile 87 bzw. 87' und entsprechende Zuleitungen 98 mit der Hydraulikseite der Kolben 84 bzw. 84' verbunden sein. Ein Sensor 810, der Unebenheiten der Fahrbahn erfassen kann, wird benutzt, um die Spannung an den Kondensatorplatten der Dämpfer 86, 86' bzw. 87 und 87' zu beeinflussen. Die Steuerspannung des Sensors kann ebenfalls benutzt werden, um die zusätzliche Gasfeder 82 wahlweise zu- oder abzuschalten.

An das hydraulische System kann eine zusätzliche Flüssigkeitsversorgungseinheit (nicht gezeichnet) mit Pumpe zur Niveauregulierung des Flüssigkeitsdrucks im Hydrauliksystem angeschlossen sein.

Im Falle der Verwendung einer magnetorheologischen Flüssigkeit als Hydraulikflüssigkeit im Feder-Massen-Schwingkraftkoppler sind bei dem System gemäß Fig. 8 die elektrorheologischen Ventile 86, 86' bzw. 87 und 87' durch MRF-Ventile ersetzt, wie in Fig. 5 gezeigt.

## Patentansprüche

1. Feder-Massen-Schwingkraftkoppler mit variabler Dämpfung zur Ankopplung von Massen an eine Bezugsmasse (12), bestehend wenigstens aus einer Schwingmasse (11), einem Dämpfer (111), zwei Federn (17,18), zur Verbindung von Schwingmasse (11) und Bezugsmasse (12), von denen mindestens eine Feder (18) wahlweise zuschaltbar gestaltet ist, wobei die Zuschaltung der Feder (18) über ein Kopplungselement (111) auf Basis einer elektrorheologischen oder magnetorheologischen Flüssigkeit erfolgt.

2. Feder-Massen-Schwingkraftkoppler nach Anspruch 1, **dadurch gekennzeichnet, dass** diese zusätzlich wenigstens eine Tilgermasse (113) aufweist, die über ein gegebenenfalls zuschaltbares Feder-Dämpferelement (115) mit der Masse (11) verbunden ist.

3. Feder-Massen-Schwingkraftkoppler nach Anspruch 2, **dadurch gekennzeichnet, dass** die Zuschaltung über ein Kopplungselement auf Basis einer elektrorheologischen oder magnetorheologischen Flüssigkeit erfolgt.

4. Feder-Massen-Schwingkraftkoppler nach Anspruch 2 oder 3, **dadurch gekennzeichnet, dass** sie wenigstens eine weitere Hilfsmasse (114) aufweist, die über ein weiteres gegebenenfalls zuschaltbares Feder-Dämpferelement (116) mit der Tilgermasse (113) verbunden ist.

5. Feder-Massen-Schwingkraftkoppler nach einem der Ansprüche 1-4, **dadurch gekennzeichnet, dass** die Feder-Dämpfer-Kopplungselemente eine Kombination aus Torsions-, Spiral- oder Gasdruckfedern mit auf elektrorheologischen Flüssigkeiten bzw. magnetorheologischen Flüssigkeiten basierenden Dämpfern sind.

6. Feder-Massen-Schwingkraftkoppler nach Anspruch 5, **dadurch gekennzeichnet, dass** die Federelemente Gasdruckfedern (81,81'82) sind.

7. Hydraulisches Federungssystem auf Basis von zwei oder mehreren Gasdruckfedern (81,81',82), **dadurch gekennzeichnet, dass** eine Gasdruckfeder (81) ein elektrorheologische oder magnetorheologische Flüssigkeit aufweisendes Dämpferelement (86) aufweist und über mindestens ein weiteres Dämpfer- bzw. Koppelelement (87) auf Basis von elektrorheologischer oder magnetorheologischer Flüssigkeit mit einer weiteren Gasdruckfeder (82) verbunden ist.

8. Verwendung des Feder-Massen-Schwingkraftkopplers gemäß den Ansprüchen 1-6 zur Modifikation mechanischer Eigenschwingungen in Maschinen, Fahrzeug-Fahrwerken oder Motoren, insbesondere Auswuchtmaschinen, Werkzeugmaschinen, Unwichterregern, Prüfmaschinen, Resonanzprüfmaschinen, Wechselbiegemaschinen, Siebförderern, Exzenterpressen, Kurbelgetrieben, Schwing- und Resonanzantrieben, Schwinggetrieben, Verbrennungselektromotoren oder Motorlagerungen.

## Claims

1. Spring/mass vibratory force coupler with variable damping for coupling masses to a reference mass (12), comprising at least a vibratory mass (11), a damper (111), two springs (17, 18), for connecting the vibratory mass (11) and the reference mass (12), of which at least one spring(18) can be optionally connected up, the spring (18) being connected up by means of a coupling element (111) based on an electrorheological or magnetorheological fluid.

2. Device according to Claim 1, **characterized in that** this additionally has at least one absorber mass (113), which is connected to the mass (11) by means of a spring/damper element (115) which can be connected up if required.

3. Device according to Claim 2, **characterized in that** connection takes place by means of a coupling element based on an electrorheological or magnetorheological fluid.

4. Device according to Claim 2 or 3, **characterized in that** it has at least one other auxiliary mass (114), which is connected to the absorber mass (113) by means of another spring/damper element (116), which can be connected up if required.

5. Device according to one of Claims 1 to 4, **characterized in that** the spring/damper coupling elements are a combination of torsion, coil or gas-pressure springs with dampers based on electrorheological fluids or magnetorheological fluids.

6. Devices according to Claim 5, **characterized in that** the spring elements are gas-pressure springs (81, 81', 82).

7. Hydraulic suspension system based on two or more gas-pressure springs (81,81', 82), **characterized in that** one gas-pressure spring (81) has an ERF or MRF damper element (86) and is connected to another gas-pressure spring (82) by means of at least one other damper or coupling element (87) based on ERF or MRF.

8. Use of the spring/mass vibratory force coupler according to Claims 1 to 6 to modify mechanical natural vibrations in machines, vehicle running gear or motors, in particular balancing machines, machine tools, unbalance generators, testing machines, resonance testing machines, altemate-bending machines, screen conveyors, eccentric presses, crank mechanisms, Vibration and resonance drives, vibratory gear mechanisms, internal combustion engines/electric motors or engine mounts.

## Revendications

1. Coupleur à forces vibratoires pour ressorts/masses à amortissement variable pour le couplage de masses à une masse de référence (12), comprenant au moins une masse vibrante (11), un amortisseur (111), deux ressorts (17, 18) pour relier la masse vibrante (11) à la masse de référence (12), dont au moins un ressort (18) peut être couplé au choix, le couplage du ressort (18) se faisant à l'aide d'un élément de couplage (111) à base d'un liquide électrorhéologique ou magnétorhéologique.

2. Coupleur à forces vibratoires pour ressorts/masses selon la revendication 1, **caractérisé en ce qu'**il présente en outre au moins une masse d'amortissement (113) qui est reliée à la masse (11) à l'aide d'un élément ressort/amortisseur pouvant éventuellement être couplé.

3. Coupleur à forces vibratoires pour ressorts/masses selon la revendication 2, **caractérisé en ce que** le couplage se fait par l'intermédiaire d'un élément de couplage à base d'un liquide électrorhéologique ou magnétorhéologique.

4. Coupleur à forces vibratoires pour ressorts/masses selon la revendication 2 ou 3, **caractérisé en ce qu'**il présente au moins une autre masse secondaire (114) qui est reliée à la masse d'amortissement (113) par l'intermédiaire d'un autre élément ressort/amortisseur (116) pouvant éventuellement être couplé.

5. Coupleur à forces vibratoires pour ressorts/masses selon l'une quelconque des revendications 1 à 4, **caractérisé en ce que** les éléments de couplage ressort/amortisseur sont une combinaison de ressorts à torsion, à spirales ou à pression de gaz avec des amortisseurs à base de liquides électrorhéologiques ou magnétorhéologiques.

6. Coupleur à forces vibratoires pour ressorts/masses selon la revendication 5, **caractérisé en ce que** les éléments élastiques sont des ressorts à pression de gaz (81, 81', 82).

7. Système de suspension hydraulique à base de deux ou de plusieurs ressorts à pression de gaz (81, 81', 82), **caractérisé en ce qu'**un ressort à pression de gaz (81) présente un élément amortisseur (86) contenant un liquide électrorhéologique ou magnétorhéologique et **en ce qu'**il est relié à un autre ressort à pression de gaz (82) par l'intermédiaire d'au moins un autre élément amortisseur ou coupleur (87) à base d'un liquide électrorhéologique ou magnétorhéologique.

8. Utilisation du coupleur à forces vibratoires pour ressorts/masses selon les revendications 1 à 6 pour modifier des vibrations mécaniques propres dans des machines, des mécanismes de roulement de véhicules ou des moteurs, notamment dans des machines à équilibrer, des machines-outils, des excitateurs à balourd, des machines de contrôle, des machines de contrôle à résonance, des machines à flexions alternées, des transporteurs à tamis, des presses excentriques, des mécanismes à manivelles, des entraînements par oscillation et résonance, des engrenages oscillants, des moteurs électriques à combustion ou des coussinets de moteurs.
